# EUROPEAN PATENT APPLICATION

(11) **EP 4 614 221 A1**
(43) Date of publication of application: **10.09.2025**
(21) Application number: 25157583.3
(22) Date of filing: 13.02.2025
(51) Int. Cl.: G02F 1/35, H01S 3/067, H01S 3/30

(54) **NARROW LINEWIDTH SQUEEZED STATE LIGHT GENERATOR**

(30) Priority: 07.03.2024 US 202418598795
(71) Applicant: Honeywell International Inc., Charlotte, NC 28202 (US)
(72) Inventor: PUCKETT, Matthew Wade, Charlotte, 28202 (US); WU, Jianfeng, Charlotte, 28202 (US); TIN, Steven, Charlotte, 28202 (US); FERTIG, Chad, Charlotte, 28202 (US)
(74) Representative: Haseltine Lake Kempner LLP

(57) **Abstract**

Systems and methods for a narrow linewidth squeezed state light generator. In certain embodiments, a system includes a pump optical signal source configured to emit a pump optical signal at a first frequency. Further, the system includes a resonator, wherein the pump optical signal is coupled to propagate in a first direction within the resonator. Additionally, the first frequency is at a first resonant frequency of the resonator and stimulated Brillouin scattering (SBS) within the resonator generates an SBS optical signal having a second frequency at a second resonant frequency of the resonator to propagate in a second direction opposite the first direction within the resonator. Also, the SBS optical signal generates squeezed optical signals through spontaneous four-wave mixing. Moreover, the system includes an output optical transmission media configured to output the squeezed optical signals generated within the resonator.

## Description

### BACKGROUND

Sensors are essential in technology, acting as interfaces between the physical world and electronic systems. Some sensors use light to gather information about the relationship between the electronic system and the physical world. In particular, light can propagate within optical resonators, interrogate environments, analyze materials, and perform other operations. Frequently, it is desirable to keep the power of the light as low as possible during sensor operation, as high-power light can cause problems such as non-linearities, material damage, and measurement contamination. However, at lower power levels, shot noise, which is a statistical fluctuation in light intensity, affects the accuracy of sensor measurements, setting a lower bound on the power of the input light. By using photons with spectral and quantum properties superior to those of classically generated light, such as reduced shot noise, a sensor can achieve the same sensitivity level while using fewer photons.

### SUMMARY

Systems and methods for a narrow linewidth squeezed state light generator. In certain embodiments, a system includes a pump optical signal source configured to emit a pump optical signal at a first frequency. Further, the system includes a resonator, wherein the pump optical signal is coupled to propagate in a first direction within the resonator. Additionally, the first frequency is at a first resonant frequency of the resonator and stimulated Brillouin scattering (SBS) within the resonator generates an SBS optical signal having a second frequency at a second resonant frequency of the resonator to propagate in a second direction opposite the first direction within the resonator. Also, the SBS optical signal generates squeezed optical signals through spontaneous four-wave mixing. Moreover, the system includes an output optical transmission media configured to output the squeezed optical signals generated within the resonator.

### BRIEF DESCRIPTION OF THE DRAWINGS

Drawings accompany this description and depict only some embodiments associated with the scope of the appended claims. Thus, the described and depicted embodiments should not be considered limiting in scope. The accompanying drawings and specification describe the exemplary embodiments and features thereof, with additional specificity and detail, in which:
FIG. 1 is a block diagram of a system for producing narrow linewidth squeezed state light according to an aspect of the present disclosure;
FIG. 2 is a graph of the frequency of light in a system for producing narrow linewidth squeezed state light according to an aspect of the present disclosure;
FIG. 3 is a block diagram of a system for producing narrow linewidth squeezed state light using a grating according to an aspect of the present disclosure;
FIG. 4 is a block diagram of a system for producing narrow linewidth squeezed state light according to an aspect of the present disclosure; and
FIG. 5 is a flowchart diagram of a method for providing narrow linewidth squeezed state light according to an aspect of the present disclosure.

Per common practice, the drawings do not show the various described features according to scale, but the drawings show the features to emphasize the relevance of the features to the example embodiments.

### DETAILED DESCRIPTION

The following detailed description refers to the accompanying drawings that form a part of the present specification. The drawings, through illustration, show specific illustrative embodiments. However, it is to be understood that other embodiments may be used and that logical, mechanical, and electrical changes may be made.

Systems and methods for generating narrow linewidth squeezed state light are described herein. In particular, a pump optical signal propagates within a resonator, where the frequency of the pump optical signal is at the resonant frequency of the resonator. As the pump signal propagates around the resonator, stimulated Brillouin scattering (SBS) causes the formation of a counter-propagating SBS optical signal. The counter-propagating SBS optical signal produces two squeezed optical signals through spontaneous four-wave mixing and squeezed quadrature noise, wherein either the phase uncertainty, or the amplitude uncertainty, of the squeezed photon states may be lower than that of the pump photons. Further, the system may employ an additional nested resonator coupled to or formed within the resonator, where the nested resonator causes resonance splitting and prevents the SBS optical signal from generating multiple additional higher-order SBS optical signals, which could interfere with the generated squeezed optical signals. Thus, the systems and methods described herein produce optical signals with increased frequency stability and squeezed quadrature noise.

As described above, when the power of optical signals decreases, the effects of shot noise become increasingly problematic. This shot noise arises because of the discrete nature of photons in a given optical signal. The quantized and probabilistic nature of photons causes random fluctuations in the number of photons detected or measured over a period. The shot noise can negatively affect the operation of optical sensors. In particular, high-power optical signals can cause undesirable non-linear effects that can bias measurements or interfere with measurements, as such low-power optical signals are often desirable for sensor operation. However, shot noise imposes a lower Signal-to-noise (SNR) limit on the low-end power level of optical signals.

Sensors can overcome the lower limits imposed by the shot noise by using squeezed optical signals generated by the systems described herein. A squeezed optical signal is a state of light in quantum optics where one can reduce the quantum noise in one property below a standard quantum limit at the expense of increased noise in the complementary property. For example, when reducing the uncertainty in the phase, the uncertainty in the amplitude increases. Often, non-linear optical effects are used to generate the squeezed light. For example, squeezed light can be created using parametric down-conversion, four-wave mixing, and other non-linear optical effects.

When producing squeezed light using four-wave mixing, a non-linear optical process occurs where lasers with two or three different frequencies interact within a medium with non-linear properties (such as an optical fiber) to generate new optical fields. In four-wave mixing, the interaction may involve mixing the input photons to produce new photons with different frequencies, one photon being referred to as a signal optical signal and the other photon being referred to as an idler optical signal. In some implementations, four-wave mixing may be spontaneous four-wave mixing. Quantum fluctuations within the non-linear medium cause the optical signals to interact and generate the signal and idler optical signals.

In embodiments described herein, signal and idler optical signals are generated within a resonator, and the squeezed light is provided as an output from the resonator for use by other systems. A coupler couples a pump optical signal into a resonator to generate the squeezed light. The pump optical signal is an optical signal at a frequency equal to one of the resonant frequencies of the resonator. As the pump optical signal propagates around the resonator, SBS causes an SBS optical signal to propagate in the opposite direction of the pump optical signal. The SBS optical signal will be at a resonant frequency of the resonator, different from the resonant frequency of the pump optical signal.

In further embodiments, the resonator may be coupled to a nested resonator to inhibit the cascaded generation of SBS lasers. In particular, light propagating within the resonator may be coupled into the nested resonator to perform resonant splitting. The resonant splitting shifts the resonator frequency of higher-order SBS lasers away from the SBS gain profile. Thus, the resonance splitting may inhibit the cascaded generation of SBS lasers, preventing any cascaded SBS lasers from clamping the first order SBS power and interfering with the generated signal and idler optical signals.

When the signal and idler, which is the squeezed light, optical signals are generated within the resonator, a coupler couples the signal and idler optical signals out of the resonator. Optical waveguides and other optical components, coupled to the resonator, convey the signal and idler optical signals to other systems that can perform optical sensing. As the signal and idler optical signals are squeezed, other systems can use the squeezed signals to perform sensing at lower power levels without being negatively affected by the shot noise.

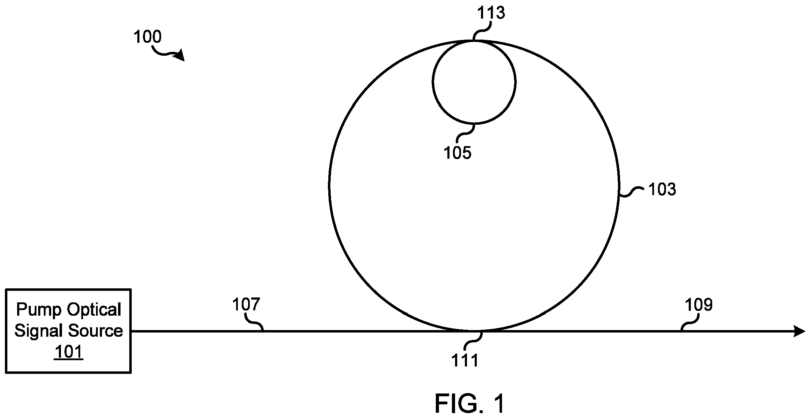

FIG. 1 is a diagram of a system 100 for generating narrow linewidth squeezed light. As illustrated, the system 100 includes a pump optical signal source 101 that generates and emits a pump optical signal. The pump optical signal source 101 includes devices capable of generating light at a particular frequency. For example, the pump optical signal source 101 may include a laser diode, such as but not limited to distributed feedback laser diodes or other laser-light generating devices. As shown, the pump optical signal source 101 is coupled to optical transmission media 107 to provide the pump optical signal produced by the pump optical signal source 101 to other optical components within the system 100. The optical transmission media 107 may include optical waveguides, optical fibers, free-space optical components, and the like.

The system 100 may also include an optical coupler 111 and a resonator 103. The optical transmission media 107 conveys the pump optical signal to an optical coupler 111, where the optical coupler 111 couples a portion of the pump optical signal into a resonator 103, where the coupled portion of the pump optical signal propagates around the resonator 103. As described herein, a resonator, such as the resonator 103, may refer to a closed optical path through which optical signals having particular frequencies resonate. For example, the resonator 103 may be a fiber optic resonator having one or more turns of a fiber optic coil. The resonant frequencies of the fiber optic coil are based on a constructive interference condition such that light waves having traversed the coil a different number of times interfere constructively at any point in the coil. Because of this constructive interference, an optical wave with a wavelength λ is referred to as "on resonance" when the round trip resonator path length equals an integral number of wavelengths.

In certain embodiments, when the pump optical signal propagates within the resonator 103, the pump optical signal generates a counter-propagating stimulated Brillouin scattering (SBS) optical signal that propagates in the opposite direction from the pump optical signal. Stimulated Brillouin Scattering is an effect that occurs when an incident light wave propagating through a medium, such as the optical fiber of the resonator 103, reaches a threshold power that results in an acoustic wave within the fiber. This acoustic wave excitation alters the refractive index of the fiber glass, causing a scattering of the incident light. The scattered light propagates in the opposite direction from the direction of the pump optical signal and may be referred to as the SBS optical signal.

In additional embodiments, the system 100 may include a nested resonator 105. As illustrated, an optical coupler 113 may couple the nested resonator 105 to the resonator 103. In particular, the optical coupler 113 couples a portion of the light propagating within the resonator 103 into the nested resonator 105. While Brillouin lasers offer some of the narrowest and most stable spectral characteristics, using them at a single optical frequency is often necessary. Further, Brillouin lasers typically exhibit higher-order, cascaded lasing beyond certain power thresholds. To suppress the higher-order lasing in a Brillouin laser, the nested relationship of the nested resonator 105 to the resonator 103 may suppress the higher-order lasing without affecting the first-order SBS laser. In particular, the pump optical signal propagates within the larger resonator 103 at a resonant frequency of the resonator 103. The light in the larger resonator 103 couples into the smaller nested resonator 105, and if the light resonates within the nested resonator 105, the resonance of the larger resonator 103 will be split into two resonances. The original resonance of the stand-alone resonator 103 gets suppressed and split into two separated resonances. The separation depends on the coupling efficiency and free spectral range of the cavity 103. This suppression may be exploited to inhibit higher-order Brillouin lasing within the larger resonator 103. For example, the resonance corresponding to the first-order Brillouin lasing can be designed to be unsuppressed, but the resonance corresponding to second-order and higher-order Brillouin lasing can be designed to be suppressed. As such, the optical signals propagating within the resonator 103 include the pump optical signal and a counter-propagating SBS optical signal without higher-order Brillouin SBS optical signals.

In further embodiments, the SBS optical signal cause spontaneous four-wave mixing (SFWM) to generate a two-state squeezing in signal and idler optical signals. In particular, the SFWM is a non-linear optical process in which the SBS optical signal acts as a degenerated pump light within the resonator 103, which is a non-linear medium. The SFWM leads to the annihilation of the two SBS photons and the simultaneous creation of two new photons, the signal and idler photons. This phenomenon relies on the conservation of both energy and momentum (phase matching) within the medium, where the combined energy of the signal and idler photons equals that of the two colliding photons, and their combined momentum is also conserved.

In certain embodiments, the signal and idler photons propagating around the resonator 103 are coupled out of the resonator 103 by the optical coupler 111. The optical coupler 111 may couple the signal and idler photons from the resonator 103 into an optical transmission medium 109. The optical transmission medium 109 conveys the signal and idler photons out of the system 100 for use by other systems. As the signal and idler photons are squeezed light, the signal and idler photons enable sensing at lower power levels with less shot noise.

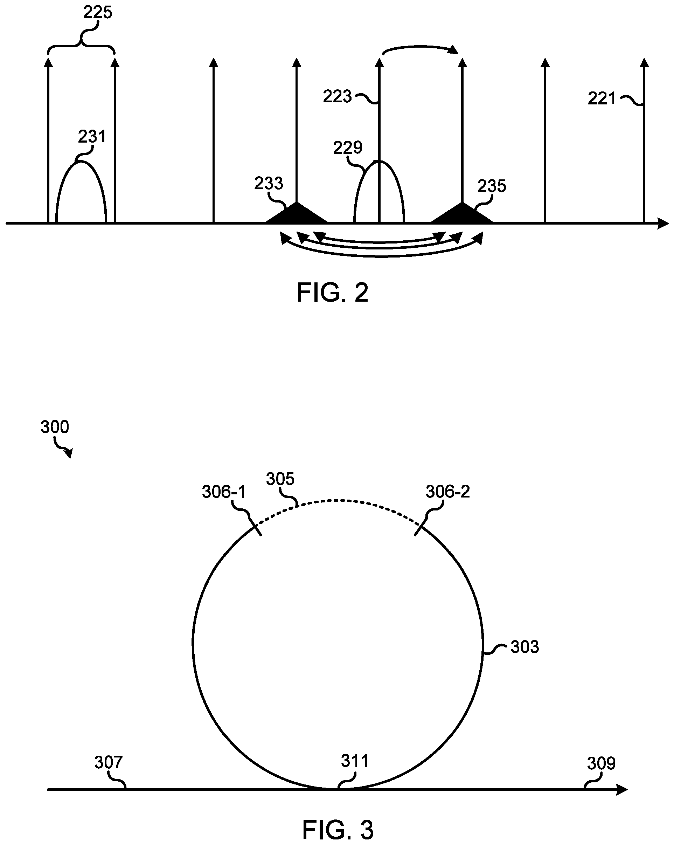

FIG. 2 is a graph illustrating the frequencies of the different optical signals that can propagate within the resonator 103. As illustrated, the horizontal axis is the frequency of the optical signals. Within the resonator 103, a pump optical signal 221 propagates at a resonant frequency of the resonator 103. As the pump optical signal 221 propagates around the resonator 103, the pump optical signal 221 may induce a counter-propagating SBS optical signal 223. As illustrated, the counter-propagating SBS optical signal 223 is produced at a frequency corresponding to an SBS gain curve 229. As used herein, the SBS gain curve 229 corresponds to a frequency range where an SBS optical signal is generated. Thus, the resonator 103 may be designed, and the frequency of the pump laser may be selected such that the pump optical signal 221 and the gain curve 229 for the generation of the first-order SBS optical signal 223 align with the resonances of the resonator 103.

In further embodiments, to prevent the counter-propagating SBS optical signal 223 from causing cascaded higher-order SBS optical signals, a portion of the optical signals propagating within the resonator 103 may be coupled into a nested resonator 105. The nested resonator 105 then causes resonance splitting 225 around the gain curve 231, which resonance splitting causes higher-order SBS gain curves 231 to be misaligned with resonant frequencies of the resonator 103. As the resonator frequencies and higher-order SBS gain curves are misaligned with each other, higher-order SBS optical signals fail to be generated within the resonator 103.

In certain embodiments, because of the effects of the SBS on the pump optical signal 221, the pump optical signal 221 and the counter-propagating SBS optical signal 223 counter-propagate within the resonator 103. The SBS optical signal 223 interact within the resonator 103 through spontaneous four-wave mixing to generate a signal optical signal 233 and an idler optical signal 235. As illustrated, the pump optical signal 221 may be at a pump frequency *fₚ*, and the SBS optical signal 223 may be at an SBS frequency *f_{SBS}.* After interacting, the signal optical signal 233 may be at the resonance near frequency *f_{SBS}* - *FSR*, which is below the pump optical signal 221 and the idler optical signal 235 may be at the frequency *f_{SBS}* + *FSR*, which is above the SBS frequency. The signal optical signal 233 and the pump optical signal 221 may be used for other sensing devices.

FIG. 3 is a diagram of a portion of a system 300 similar to the system 100 in FIG. 1 for generating narrow linewidth squeezed light. However, the system 300 differs from the system 100 in that the system 300 includes a nested resonator 305 that is implemented using a Bragg grating as compared to the coupled nested resonator 105, shown in Figure 1. As illustrated, the system 300 receives a pump optical signal through optical transmission media 307 that is similar to the optical transmission media 107.

The system 300 may also include an optical coupler 311 and a resonator 303. The optical transmission media 307 conveys the pump optical signal to an optical coupler 311, where the optical coupler 311 couples a portion of the pump optical signal into the resonator 303, where the coupled portion of the pump optical signal propagates around the resonator 303. As discussed, when the pump optical signal propagates within the resonator 303, the pump optical signal generates a counter-propagating stimulated Brillouin scattering (SBS) optical signal that propagates in the opposite direction as the pump optical signal.

In certain embodiments, the system 300 includes a nested resonator 305 implemented as a Bragg filter or grating incorporated into a portion of the optical path of the resonator 303. In particular, the nested resonator 305 includes a first reflector 306-1 and a second reflector 306-2 on the optical path of the resonator. The first reflector 306-1 and the second reflector 306-2 are partial reflectors that reflect a portion of light within the nested resonator 305 back into the nested resonator 305. For example, the first reflector 306-1 reflects a portion of light within the nested resonator 305 towards the second reflector 306-2, and the second reflector 306-2 reflects a portion of light within the nested resonator 305 towards the first reflector 306-1. Thus, a portion of the light propagating within the resonator 303 will also resonate within the nested resonator 305, leading to resonance splitting within the combination of the resonator 303 and the nested resonator 305. Thus, the nested resonator 305 performs a similar resonance splitting function as discussed above with respect to the nested resonator 105 in FIG. 1, and the nested resonator 305 suppresses higher-order SBS optical signals.

Additionally, the first order SBS optical signal cause spontaneous four-wave mixing (SFWM) to generate a signal optical signal and an idler optical signal. Further, the generated signal optical signal and idler optical signals propagating around the resonator 303 are coupled out of the resonator 303 by the optical coupler 311. The optical coupler 311 may couple the signal and idler optical signals out of the resonator 303 into an optical transmission medium 309. The optical transmission medium 309 conveys the signal and idler photons out of the system 300 for use by other systems. As the signal and idler photons are squeezed light, the signal and idler photons enable sensing at lower power levels with less shot noise.

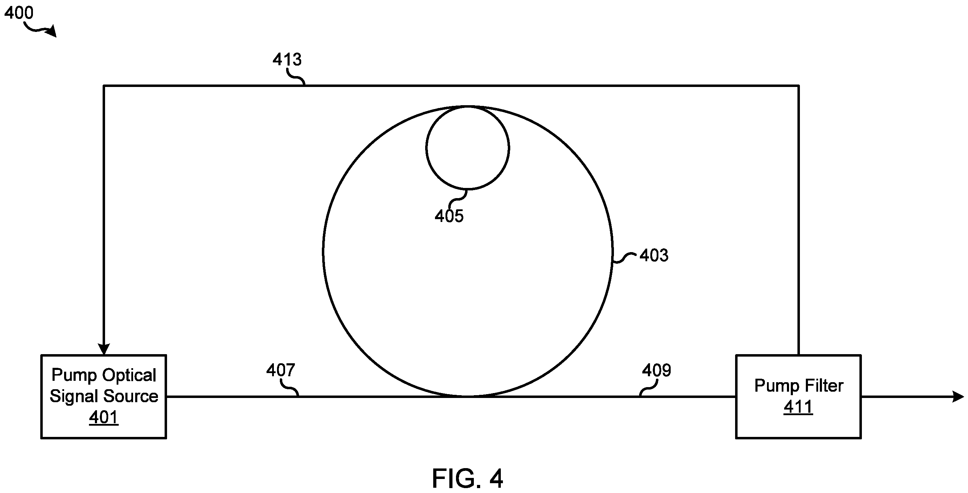

FIG. 4 is a block diagram of a system 400 for generating squeezed light. As illustrated, the system 400 includes a pump optical signal source 401, an optical transmission media 407, a resonator 403, a nested resonator 405, and an optical transmission medium 409. The pump optical signal source 401, optical transmission media 407, resonator 403, nested resonator 405, and optical transmission medium 409 function similar to the pump optical signal source 101, optical transmission media 107, resonator 103, nested resonator 105, and optical transmission medium 109 described above in connection with FIG. 1.

In additional embodiments, the system 400 includes a pump filter 411. The pump filter 411 is a filter that is placed on the reflection port to tap the pump optical signal from the optical transmission medium 409 into a frequency control loop 413.

In further embodiments, the frequency control loop 413 includes components for maintaining the frequency of the pump optical signal at the resonant frequency of the resonator 403. For example, the frequency control loop 413 may include photodetectors for detecting the pump optical signal and electronics for controlling the pump optical signal produced by the pump optical signal source 401. In some implementations, the frequency control loop 413 is a Pound-Drever-Hall loop to maintain the frequency of the pump optical signal.

In exemplary embodiments, the frequency control loop 413 may include one or more processors to aid in controlling the frequency of the pump optical signal produced by the pump optical signal source 401. The one or more processors execute instructions that direct the processors to control the frequency. The processors may be a single processor or a device that includes combinations of general-purpose processors, multi-core processors, multiple processors, dedicated circuitry, and the like. The functions performed by the processors may be implemented using software, firmware, hardware, or any appropriate combination thereof. The processors and other computational devices may be supplemented by, or incorporated in, specially-designed application-specific integrated circuits (ASICs) or field programmable gate arrays (FPGAs). The processors and other computational devices can also include or function with software programs, firmware, or other computer-readable instructions for performing various process tasks, calculations, and control functions used in the present methods and systems.

The present methods may be implemented by computer-executable instructions, such as program modules or components executed by the processor or other computational devices. Generally, program modules include routines, programs, objects, data components, data structures, algorithms, and the like, which perform particular tasks or implement particular abstract data types.

In addition to the processors, the processors may also interface with a memory. The memory may be any suitable computer-readable storage media that includes, for example, non-volatile memory devices, including semiconductor memory devices such as random access memory (RAM), read-only memory (ROM), electrically erasable programmable ROM (EEPROM), or flash memory devices; magnetic disks such as internal hard disks or removable disks; optical storage devices such as compact discs (CDs), digital versatile discs (DVDs), Blu-ray discs, or other media that can carry or store desired program code as computer-executable instructions or data structures.

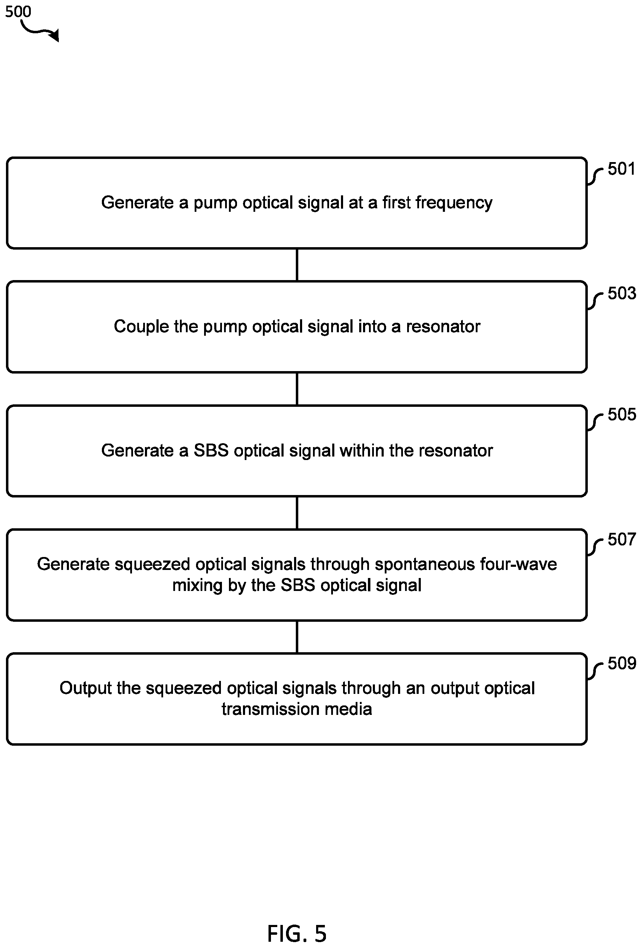

FIG. 5 is a flowchart of a method 500 for generating narrow linewidth squeezed light. The method 500 proceeds at 501, where a pump optical signal is generated at a first frequency. Additionally, the method 500 proceeds at 503, where the pump optical signals is coupled into a resonator. Further, the method 500 proceeds at 505, where an SBS optical signal is generated within the resonator having a second frequency at a second resonant frequency of the resonator and the SBS optical signal propagates in a second direction opposite the first direction within the resonator. Moreover, the method 500 proceeds at 507, where squeezed optical signals are generated through spontaneous four-wave pumped by the SBS optical signal. Also, the method 500 proceeds at 509, where the squeezed optical signals are output through an output optical transmission media.

### Example Embodiments

Example 1 includes a system comprising: a pump optical signal source configured to emit a pump optical signal at a first frequency; a resonator, wherein the pump optical signal is coupled to propagate in a first direction within the resonator; wherein the first frequency is at a first resonant frequency of the resonator and stimulated Brillouin scattering (SBS) within the resonator generates an SBS optical signal having a second frequency at a second resonant frequency of the resonator to propagate in a second direction opposite the first direction within the resonator; wherein the SBS optical signal generates squeezed optical signals through spontaneous four-wave mixing; and an output optical transmission media configured to output the squeezed optical signals generated within the resonator.

Example 2 includes the system of Example 1, wherein the resonator is a fiber optic resonator.

Example 3 includes the system of any of Examples 1-2, further comprising a nested resonator, wherein a portion of the second order spontaneous Brillouin scattering (SpBS) optical signal propagating within the resonator is coupled into the nested resonator, wherein nested resonant frequencies of the nested resonator and resonant frequencies of the resonator are infrequently aligned.

Example 4 includes the system of Example 3, wherein the nested resonator is a nested fiber optic resonator coupled to the resonator.

Example 5 includes the system of any of Examples 3-4, wherein the nested resonator is along an optical path of the resonator.

Example 6 includes the system of any of Examples 1-5, further comprising an optical coupler that couples the pump optical signal into the resonator.

Example 7 includes the system of Example 6, wherein the optical coupler couples a portion of the pump optical signal into the output optical transmission media.

Example 8 includes the system of Example 7, further comprising a pump optical signal filter configured to couple the pump optical signal out of the output optical transmission media into a frequency control loop, wherein the frequency control loop maintains the first frequency of the pump optical signal source at the first resonant frequency.

Example 9 includes a method comprising: generating a pump optical signal at a first frequency; coupling the pump optical signal into a resonator, wherein the pump optical signal propagates in a first direction at a first resonant frequency of the resonator; generating a stimulated Brillouin scattering (SBS) optical signal within the resonator having a second frequency at a second resonant frequency of the resonator and the SBS optical signal propagates in a second direction opposite the first direction within the resonator; generating squeezed optical signals through spontaneous four-wave pumped by the SBS optical signal; and outputting the squeezed optical signals through an output optical transmission media.

Example 10 includes the method of Example 9, wherein the resonator is a fiber optic resonator.

Example 11 includes the method of any of Examples 9-10, further comprising coupling a portion of the SBS optical signal propagating within the resonator into a nested resonator, wherein nested resonant frequencies of the nested resonator and resonant frequencies of the resonator are infrequently aligned.

Example 12 includes the method of Example 11, wherein the nested resonator is a nested fiber optic resonator coupled to the resonator.

Example 13 includes the method of any of Examples 11-12, wherein the nested resonator is along an optical path of the resonator.

Example 14 includes the method of any of Examples 9-13, wherein an optical coupler couples a portion of the pump optical signal and the squeezed optical signals into the output optical transmission media.

Example 15 includes the method of Example 14, further comprising coupling the pump optical signal out of the output optical transmission media into a frequency control loop, wherein the frequency control loop maintains the first frequency at the first resonant frequency.

Example 16 includes a system comprising: a pump optical signal source configured to emit a pump optical signal at a first frequency; a resonator, wherein the pump optical signal is coupled to propagate in a first direction within the resonator; wherein the first frequency is at a first resonant frequency of the resonator and stimulated Brillouin scattering (SBS) within the resonator generates an SBS optical signal having a second frequency at a second resonant frequency of the resonator to propagate in a second direction opposite the first direction within the resonator; wherein the SBS optical signal generates squeezed optical signals through spontaneous four-wave mixing; a nested resonator, wherein a portion of the SBS optical signal propagating within the resonator is coupled into the nested resonator, wherein nested resonant frequencies of the nested resonator and resonant frequencies of the resonator are infrequently aligned; and an output optical transmission media configured to output the squeezed optical signals generated within the resonator.

Example 17 includes the system of Example 16, wherein the nested resonator is a nested fiber optic resonator coupled to the resonator.

Example 18 includes the system of any of Examples 16-17, wherein the nested resonator is along an optical path of the resonator.

Example 19 includes the system of any of Examples 16-18, further comprising an optical coupler configured to couple a portion of the pump optical signal into the output optical transmission media.

Example 20 includes the system of Example 19, further comprising a pump optical signal filter configured to couple the pump optical signal out of the output optical transmission media into a frequency control loop, wherein the frequency control loop maintains the first frequency of the pump optical signal source at the first resonant frequency.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A system comprising:
a pump optical signal source (101) configured to emit a pump optical signal at a first frequency;
a resonator (103), wherein the pump optical signal is coupled to propagate in a first direction within the resonator (103);
wherein the first frequency is at a first resonant frequency of the resonator (103) and stimulated Brillouin scattering (SBS) within the resonator (103) generates an SBS optical signal having a second frequency at a second resonant frequency of the resonator (103) to propagate in a second direction opposite the first direction within the resonator (103);
wherein the SBS optical signal generates squeezed optical signals through spontaneous four-wave mixing; and
an output optical transmission media (109) configured to output the squeezed optical signals generated within the resonator (103).

2. The system of claim 1, wherein the resonator (103) is a fiber optic resonator.

3. The system of claim 1, further comprising a nested resonator (105), wherein a portion of the second order spontaneous Brillouin scattering (SpBS) optical signal propagating within the resonator (103) is coupled into the nested resonator (105), wherein nested resonant frequencies of the nested resonator (105) and resonant frequencies of the resonator (103) are infrequently aligned.

4. The system of claim 3, wherein the nested resonator (105) is a nested fiber optic resonator coupled to the resonator, wherein the nested resonator (105) is along an optical path of the resonator (103).

5. The system of claim 1, further comprising an optical coupler (111) that couples the pump optical signal into the resonator (103).

6. The system of claim 5, wherein the optical coupler (111) couples a portion of the pump optical signal into the output optical transmission media (109), further comprising a pump optical signal filter (411) configured to couple the pump optical signal out of the output optical transmission media (109) into a frequency control loop (413), wherein the frequency control loop (413) maintains the first frequency of the pump optical signal source (101) at the first resonant frequency.

7. A method comprising:
generating a pump optical signal at a first frequency;
coupling the pump optical signal into a resonator (103), wherein the pump optical signal propagates in a first direction at a first resonant frequency of the resonator (103);
generating a stimulated Brillouin scattering (SBS) optical signal within the resonator (103) having a second frequency at a second resonant frequency of the resonator (103) and the SBS optical signal propagates in a second direction opposite the first direction within the resonator (103);
generating squeezed optical signals through spontaneous four-wave pumped by the SBS optical signal; and
outputting the squeezed optical signals through an output optical transmission media (109).

8. The method of claim 7, wherein the resonator (103) is a fiber optic resonator.

9. The method of claim 7, further comprising coupling a portion of the SBS optical signal propagating within the resonator (103) into a nested resonator (105), wherein nested resonant frequencies of the nested resonator (105) and resonant frequencies of the resonator (103) are infrequently aligned, wherein the nested resonator (105) is a nested fiber optic resonator coupled to the resonator (103), wherein the nested resonator (105) is along an optical path of the resonator (103).

10. The method of claim 7, wherein an optical coupler (111) couples a portion of the pump optical signal and the squeezed optical signals into the output optical transmission media (109), further comprising coupling the pump optical signal out of the output optical transmission media (109) into a frequency control loop (413), wherein the frequency control loop (413) maintains the first frequency at the first resonant frequency.
